# EUROPÄISCHE PATENTSCHRIFT

(11) **EP 0 441 125 B1**
(45) Veröffentlichungstag und Bekanntmachung des Hinweises auf die Patenterteilung: **24.11.1993**
(21) Anmeldenummer: 91100260.8
(22) Anmeldetag: 10.01.1991
(51) Int. Cl.: G01D 5/26

(54) **Längen- oder Winkelmesseinrichtung**
Device for measuring lengths or angles
Dispositif pour la mesure d'angles ou de longueurs

(30) Priorität: 23.01.1990 DE 4001848
(43) Veröffentlichungstag der Anmeldung: 14.08.1991
(73) Patentinhaber: Dr. Johannes Heidenhain GmbH, D-83292 Traunreut (DE)
(72) Erfinder: Spanner, Erwin, Dipl.-Phys., W-8220 Traunstein (DE)

(56) Entgegenhaltungen:
- DE-B- 1 040 268
- DE-U- 8 908 384
- FR-A- 2 438 822

## Beschreibung

Die Erfindung betrifft eine Längen- oder Winkelmeßeinrichtung gemäß dem Oberbegriff des Anspruches 1.

Derartige Meßeinrichtungen werden vor allem zur Messung von Relativbewegungen von beweglichen Maschinenteilen, z. B. bei Werkzeug- oder Meßmaschinen, verwendet.

Aus der DE-PS 10 40 268 ist eine Positionsmeßeinrichtung bekannt, bei der eine Abtastplatte mittels einer Blattfeder um eine parallel zur Teilungsebene des Maßstabs verlaufende Drehachse gelenkig angedrückt wird. Die Blattfeder ist weiterhin zur gegenseitigen Winkeleinstellung der Teilungen der Abtastplatte und des Maßstabs in einer Büchse mit senkrecht zur Teilungsebene des Maßstabs verlaufender Drehachse schwenkbar gelagert.

Diese Anordnung weist aber den Nachteil auf, daß sich bei der Justierung der Gitterabtastplatte bezüglich des Gittermaßstabes der aus beugungs- und abbildungstechnischen Gründen notwendige Abstand zwischen der Gitterabtastplatte und dem Gittermaßstab verändern kann.

Aus der DE-89 08 384-U1 ist eine Verstellvorrichtung für eine Abtasteinheit bekannt, bei der eine Schwenkbewegung der Abtasteinheit durch einen Über- oder oder Untersetzungshebel erfolgen kann.

Aus der DE-C- 28 44 066 ist eine Abtasteinheit bekannt, bei der die Abtastplatte parallel zur Meßteilung verschwenkt werden kann. Mit einem Trägerteil ist eine Abtastplatte über ein elastisches Gelenk verbunden. Die Drehachse dieses Gelenkes verläuft senkrecht zur Ebene der Meßteilung. Das elastische Gelenk wird durch eine sogenannte Schwachstelle gebildet, die mittels einer Verringerung des Materialquerschnittes realisiert wird.

Der Erfindung liegt die Aufgabe zugrunde, eine Längen-oder Winkelmeßeinrichtung der oben genannten Gattung gemäß DE-C-2 844 066 anzugeben, bei der sich der Abstand zwischen der Abtastplatte und dem Teilungsträger bei der Justierung nicht ändert und die eine feinfühligere Einstellung ermöglicht.

Diese Aufgabe wird erfindungsgemäß durch eine Meßeinrichtung mit den Merkmalen des Anspruches 1 gelöst.

Der mit der Erfindung erzielte Vorteil besteht darin, daß der Abstand zwischen der Abtastplatte und dem Teilungsträger bei der gegenseitigen Einstellung erhalten bleibt und daß durch das Untersetzungsverhältnis des zweiarmigen Hebels die Empfindlichkeit der Verstellbewegung deutlich gesteigert werden kann. Durch diese Maßnahme können auch bei kleinsten Gitterkonstanten die Justierungen problemlos vorgenommen werden. Ferner kann eine äußerst geringe Baugröße realisiert werden.

Anhand der Zeichnungen soll mit Hilfe von Ausführungsbeispielen die Erfindung noch näher erläutert werden.

Es zeigt
- Figur 1: eine räumliche Dastellung der wesentlichsten Komponenten einer Längenmeßeinrichtung und
- Figur 2: eine Abtasteinheit im Querschnitt.

Mit dem Bezugszeichen 1 ist ein Trägerkörper für eine Meßteilung 2 bezeichnet. Zur Messung der relativen Verschiebung zweier Objekte, die hier mit den Bezugszeichen 3 und 4 versehen und nur symbolisch angedeutet sind, ist eine Abtasteinheit 5 vorgesehen, die die Meßteilung 2 abtastet. Die Abtasteinheit 5 weist Lichtsender 6 und Detektoren 7 auf, wobei der Lichtstrom von den Gitterstrichen der bewegten Meßteilung 2 in bekannter Weise moduliert wird. Parallel zur Meßteilung 2 befindet sich eine gleichartig ausgebildete Teilung als Abtastplatte 8 in der Abtasteinheit 5.

Wie im Stand der Technik ausführlich dargestellt ist, müssen die Teilungsstriche der Meßteilung 2 und der Abtastplatte 8 genau zueinander justiert werden und bilden zueinander im allgemeinen einen kleineren Winkel, wobei aber die Parallelität der Teilungsebenen nicht beeinflußt werden darf. Man nennt diese Justierung auch Moiré-Einstellung.

Das Gehäuse 9 der Abtasteinheit 5 weist einen Einschnitt 10 zur Querschnittsverringerung auf, so daß eine Art elastisches Gelenk 11 entsteht, welches ein Trägerteil 12 der Abtasteinheit 5 mit einem Schwenkteil 13 der Abtasteinheit 5 verbindet. Der Trägerteil 12 ist an dem Objekt 3 fest angebracht und der Schwenkteil 13 trägt die Abtastplatte 8 sowie die Beleuchtungseinrichtung 6 und die Detektoren 7.

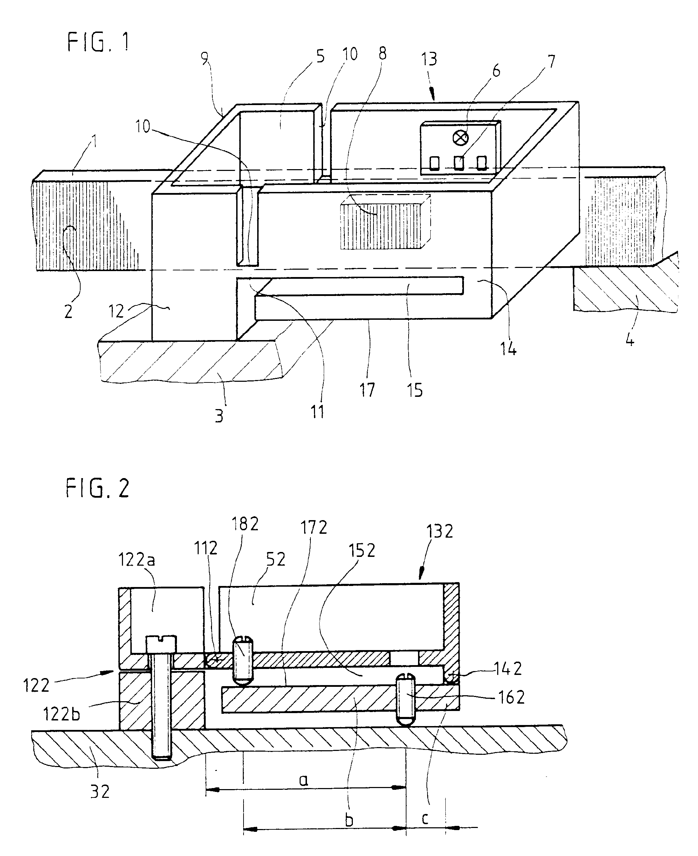

Aus Figur 2 wird die Funktion deutlicher ersichtlich als in Fig. 1. Die dort dargestellte Abtasteinheit 52 entspricht der, die in Figur 1 gezeigt ist, jedoch sind dort Drehgelenke 112 und 142 anstelle der elastischen Schwachstellen 11 und 14 gemäß Figur 1 vorgesehen. Auch das Trägerteil 122 ist geringfügig anders - nämlich zweiteilig 122a und 122b - ausgeführt.

Im Schwenkteil 13 bzw. 132 ist ein weiterer Einschnitt 15 bzw. 152 vorgesehen, so daß sich eine weitere Schwachstelle 14 bzw. ein Gelenk 142 herausbildet. Wie bereits beschrieben ist gemäß Figur 1 eine elastische Schwachstelle 14 und gemäß Figur 2 ein Drehgelenk 142 dargestellt.

Mit Hilfe einer Einstellschraube 162, die sich am Objekt 32 abstützt, kann der Schwenkteil 132 um das Gelenk 112 geschwenkt werden, was in analoger Weise auch auf den Schwenkteil 13 in Figur 1 zutrifft.

Dieses Verschwenken mit dem Hebelarm a ist die sogenannte Grobeinstellung und entspricht dem eingangs genannten Stand der Technik gemäß DE-PS 28 44 066.

Durch den Einschnitt 15 bzw. 152 wird ein Arm 17 bzw. 172 gebildet, der an einem Ende durch die Schwachstelle 14 bzw. das Gelenk 142 mit dem zugehörigen Schwenkteil 13 bzw. 132 verbunden ist. Diese Verbindung kann auch anders, z. B. durch einen nicht dargestellten Winkelhebel erfolgen, was im übrigen auch nicht erfindungswesentlich ist.

In dem Arm 172 befindet sich die Einstellschraube 162 und zwar so, daß der Arm 172 einen ungleicharmigen zweiseitigen Hebel mit den Teilarmen b und c bildet. Der Drehpunkt wird durch die Einstellschraube 162 dargestellt.

Am freien Ende des Arms 172 greift eine weitere Feineinstellschraube 182 an, die auf den langen Teilarm b des zweiseitigen Hebels (Arm 172) einwirkt. Bei Zustellung dieser Feineinstellschraube 182 wird der zweiseitige Hebel 172 um seinen Drehpunkt (Einstellschraube 162) verschwenkt, was eine gegenläufige Schwenkbewegung des Schwenkteiles 132 bewirkt.

Während die Grobverstellung mit dem Hebelarm a erfolgt, wird durch diese zweite Verschwenkung die Feinverstellung vorgenommen, der eine Untersetzung mit dem Verhältnis der Teilarme c/b des zweiseitigen Hebels 172 zugrunde liegt.

Durch das untersetzte Hebelarmverhältnis ergibt sich eine Empfindlichkeitssteigerung der resultierenden Schwenkbewegung, die bei der Zustellung der Feineinstellschraube 182 durch teilweisen Übergang in Biegung des zweiseitigen Hebels 172 noch unterstützt wird.

Da in Figur 1 die Einstellelemente (die nicht unbedingt Schrauben sein müssen - auch Exzenter oder dgl. sind möglich) nicht zeichnerisch dargestellt sind, wurde die Funktion anhand vom Ausführungsbeispiel gemäß Figur 2 erläutert.

Die beiden Ausführungsbeispiele entsprechen sich in ihrer Wirkungsweise vollständig, nur ist das Ausführungsbeispiel gemäß Figur 2 aus mehreren Einzelteilen gefertigt, während das Ausführungsbeispiel gemäß Figur 1 aus einem Stück besteht und durch Fräsen oder Erodieren in seine funktionsfähige Form gebracht wurde.

## Patentansprüche

1. Längen- oder Winkelmeßeinrichtung zur Messung der relativen Verschiebung zweier Objekte (3, 4; 32), bei der die Teilung (2) eines Teilungsträgers (1), der mit dem einen Objekt (4) verbunden ist, von einer Abtastplatte (8) einer Abtasteinheit (5; 52) abgetastet wird, die zur gegenseitigen Winkeleinstellung der Teilungen des Teilungsträgers (1) und der parallel zum Teilungsträger (1) angeordneten Abtastplatte (8) über ein Gelenk (11; 112) mit senkrecht zur Teilungsebene des Teilungsträgers (1) verlaufender Drehachse an einem Trägerteil (12; 122), der seinerseits mit dem anderen Objekt (3; 32) verbunden ist, mittels eines Einstellelementes (162), das sich an dem anderen Objekt (32) abstützt, mit einem Hebelarm (a) schwenkbar angeordnet ist, dadurch gekennzeichnet, daß die Abtasteinheit (5, 52) ein weiteres Gelenk (14, 142) aufweist, dessen Drehachse parallel zur Drehachse des ersten Gelenkes (11, 112) verläuft, daß das weitere Gelenk (14, 142) mit einem Arm (17, 172) verbunden ist, der einen zweiseitigen Hebel (172) mit bevorzugt ungleichlangen Teilarmen (b und c) darstellt, wobei der Drehpunkt des Hebels (17, 172) durch das Einstellelement (162) gebildet wird, und daß ein Feineinstellelement (182) an einem Teilarm (b) des zweiseitigen Hebels (17, 172) angreift, und daß die resultierende Schwenkbewegung der Abtasteinheit (5, 52) in dem Verhältnis der Teilarme (c/b) erfolgt.

2. Längen- oder Winkelmeßeinrichtung nach Anspruch 1, dadurch gekennzeichnet, daß das Gelenk (11) in Form eines Steges ausgebildet den Trägerteil (12) mit einem Schwenkteil (13) der Abtasteinheit (5) verbindet, wobei Gelenk (11), Trägerteil (12) und Schwenkteil (13) einen einheitlichen Körper bilden.

3. Längen- oder Winkelmeßeinrichtung nach Anspruch 1, dadurch gekennzeichnet, daß der zweiseitige Hebel (172) ungleichlange Teilarme (b und c) aufweist, und daß das Untersetzungsverhältnis durch das Verhältnis der ungleichen Längen dieser Teilarme c/b gegeben ist.

4. Längen- oder Winkelmeßeinrichtung nach Anspruch 1 dadurch gekennzeichnet, daß die Empfindlichkeit der resultierenden Schwenkbewegung durch Biegekräfte, die am zweiseitigen Hebel (172) angreifen, gesteigert wird.

## Claims

1. Length or angle measuring device for measuring the relative displacement of two objects (3, 4; 32), in which the graduation (2) of a graduation support (1) which is connected to one object (4) is scanned by a scanning plate (8) of a scanning unit (5; 52) which is arranged pivotably with a lever arm (a) for mutual angular adjustment of the graduations of the graduation support (1) and of the scanning plate (8) arranged parallel to the graduation support (1), by a joint (11; 112) with an axis of rotation extending perpendicularly to the graduation plane of the graduation support (1), on a carrier portion (12; 122) which is in turn connected to the other object (3; 32), by means of an adjusting element (162) which is supported on the other object (32), characterised in that the scanning unit (5, 52) comprises an additional joint (14, 142) of which the axis of rotation extends parallel to the axis of rotation of the first joint (11, 112), in that the additional joint (14, 142) is connected to an arm (17, 172) which constitutes a two-sided lever (172) with partial arms (b and c) preferably of unequal length, wherein the pivot point of the lever (17, 172) is formed by the adjusting element (162), and in that a fine adjusting element (182) engages one partial arm (b) of the two-sided lever (17, 172), and in that the resulting pivot movement of the scanning unit (5, 52) takes place in the ratio of the partial arms (c/b).

2. Length or angle measuring device according to claim 1, characterised in that the joint (11), constructed in the form of a web, connects the carrier portion (12) to a pivot portion (13) of the scanning unit (5), wherein joint (11), carrier portion (12) and pivot portion (13) form a common body.

3. Length or angle measuring device according to claim 1, characterised in that the two-sided lever (172) comprises partial arms (b and c) of unequal length, and in that the reduction ratio is provided by the ratio of the unequal lengths of these partial arms c/b.

4. Length or angle measuring device according to claim 1, characterised in that the sensitivity of the resulting pivot movement is increased by bending forces which are applied to the two-sided lever (172).

## Revendications

1. Dispositif de mesure de longueurs ou d'angles destiné à la mesure du déplacement relatif de deux objets (3, 4; 32), dans lequel la graduation (2) d'un support de graduation (1) lié à l'un des objets (4) est lue par une plaque de lecture (8) d'une unité de lecture (5; 52) qui, afin de permettre un réglage angulaire mutuel des graduations du support de graduation (1) et de la plaque de lecture (8) parallèle au support de graduation (1), est liée, par l'intermédiaire d'une articulation (11, 112) avec un axe de rotation perpendiculaire au plan de la graduation du support de graduation (1), à un élément support (12, 122), à son tour lié à l'autre objet (3; 32), est montée pivotante, avec un bras de levier (a), au moyen d'un organe de réglage (162) qui prend appui sur l'autre objet (32), caractérisé par le fait que l'unité de lecture (5, 52) comporte une articulation supplémentaire (14; 142) dont l'axe de rotation est parallèle à l'axe de rotation de la première articulation (11, 112), par le fait que l'articulation supplémentaire (14; 142) est liée à un bras (17; 172) qui constitue un levier (172) à deux bras avec de préférence des bras de levier (b et c) de longueur différente, le point de rotation du levier (17, 172) étant constitué par l'organe de réglage (162), par le fait qu'un organe de réglage fin (182) agit sur l'un des bras (b) du levier (17, 172) à deux bras et par le fait que le mouvement de pivotement résultant de l'unité de lecture (5,52) a lieu dans le rapport des bras de levier (c/b).

2. Dispositif de mesure de longueurs ou d'angles selon la revendication 1, caractérisé par le fait que l'articulation (11) qui se présente sous la forme d'une barrette relie l'élément support (12) à une partie pivotante (13) de l'unité de lecture (5), l'articulation (11), l'élément support (12) et la partie pivotante (13) formant un élément monobloc.

3. Dispositif de mesure de longueurs ou d'angles selon la revendication 1, caractérisé par le fait que le levier (172) à deux bras présente des bras (b et c) de longueur inégale et par le fait que le rapport de démultiplication est déterminé par le rapport c/b des longueurs inégales desdits bras de levier.

4. Dispositif de mesure de longueurs ou d'angles selon la revendication 1, caractérisé par le fait que la sensibilité du mouvement de pivotement résultant est augmentée par des forces de flexion qui agissent sur le le levier à deux bras (172).
